# EUROPÄISCHE PATENTSCHRIFT

(11) **EP 1 260 005 B1**
(45) Veröffentlichungstag und Bekanntmachung des Hinweises auf die Patenterteilung: **07.04.2004**
(21) Anmeldenummer: 01911530.2
(22) Anmeldetag: 25.01.2001
(51) Int. Cl.: H02B 1/56

(54) **SCHALTSCHRANK ODER GEHÄUSE MIT EINER KLIMATISIERUNGSEINRICHTUNG**
SWITCH CABINET OR COVER WITH AN AIR-CONDITIONING UNIT
ARMOIRE OU BOITIER DE COMMANDE AVEC DISPOSITIF DE CLIMATISATION

(30) Priorität: 23.02.2000 DE 10008383
(43) Veröffentlichungstag der Anmeldung: 27.11.2002
(73) Patentinhaber: Rittal Rudolf Loh GmbH & Co. KG, 35745 Herborn (DE)
(72) Erfinder: LECKE, Markus, 35232 Holzhausen (DE); WAGNER, Steffen, 57299 Burbach (DE)
(74) Vertreter: Fleck, Hermann-Josef, Dr.-Ing.
(86) Internationale Anmeldenummer: PCT/EP2001/000800
(87) Internationale Veröffentlichungsnummer: WO 2001/063713

(56) Entgegenhaltungen:
- DE-A- 4 413 130
- GB-A- 2 126 695
- US-A- 4 104 890

## Beschreibung

Die Erfindung betrifft einen Schaltschrank oder Gehäuse mit einer Klimatisierungseinrichtung, die ein Kältekreislaufsystem mit einem Verdampfer und einem Verflüssiger aufweist, wobei dem Verdampfer ein Luftinnenkreislauf zugeordnet ist, der mit dem Schaltschrank-Innenraum in räumlicher Verbindung steht und durch den mittels eines Lüfters die Luft des Schaltschrank-Innenraumes förderbar ist, und wobei der Verdampfer über Kühlmittelleitungen in Verbindung mit den übrigen Komponenten des Kältekreislaufes steht.

Schaltschränke dieser Art sind aus der DE 44 13 130 und der DE 196 41 552 bekannt. Hierbei ist eine Klimatisierungseinrichtung mit einem Klimagerät-gehäuse verwendet. In dem Klimagerätgehäuse sind sämtliche Komponenten des Kältekreislaufes untergebracht. In manchen Anwendungsfällen, beispielsweise dann, wenn ein Schaltschrank in Büro- oder Laborräumen aufgestellt ist, werden besondere Anforderungen an die Klimatisierungseinrichtung gestellt. Zum einen sollen diese besonders geräuscharm arbeiten. Zum anderen ist die Wärmeeinbringung von Seiten der Klimatisierungseinrichtung in den umgebenden Aufstellungsraum oft unerwünscht.

Es ist Aufgabe der Erfindung, einen Schaltschrank oder ein Gehäuse der eingangs erwähnten Art zu schaffen, bei dem eine Beeinträchtigung der Umgebung infolge von Emissionen der Klimatisierungseinrichtung reduziert sind.

Diese Aufgabe wird dadurch gelöst, dass der Verdampfer zusammen mit einem zugeordneten Lüfter in eine Verdampfereinheit integriert ist, die am Schaltschrank angeordnet ist, dass der Verflüssiger zusammen mit einem Lüfter in eine Verflüssigereinheit integriert ist, dass die Verflüssigereinheit räumlich getrennt von der Verdampfereinheit und räumlich getrennt von dem Schaltschrank angeordnet ist, dass die Verdampfereinheit mit der Verflüssigereinheit über eine zuführende und eine abführende Kühlmittelleitung in Verbindung steht, dass diese Kühlmittelleitungen den freien Raumbereich zwischen der Verdampfereinheit und der Verflüssigereinheit überbrücken, dass in die beiden Kühlmittelleitungen Verbindungskupplungen eingebaut sind, die je zwei Kupplungsteile aufweisen, von denen jedes druckfest mit einem Leitungsende der Kühlmittelleitungen verbunden ist, und dass die beiden Kupplungsteile einer Kupplung mittels eines Schnellspannverschlusses verbindbar oder trennbar sind.

Dadurch, dass die Verflüssigereinheit getrennt von der Verdampfereinheit ist, kann sie unabhängig positioniert werden. Insbesondere läßt sie sich außerhalb des Raumes unterbringen, in dem der Schaltschrank aufgestellt ist. Infolge dieser Anordnung kann die aus dem Schaltschrank mittels der Verdampfereinheit abgetauschte Wärmeenergie über das Kühlmittel dem Verflüssiger zugeleitet werden. Dieser tauscht die Wärmeenergie abseits des Schaltschrankes in die Umgebung ab. Dadurch, dass die Wärmeenergie aus dem Aufstellungsraum des Schaltschrankes abgeleitet wird, kann keine Rückerwärmung stattfinden, wodurch ein hoher Wirkungsgrad der Klimatisierungseinrichtung möglich ist. Die erfindungsgemäße Lösung erlaubt es damit auch, den klimatisierten Schaltschrank in schlecht oder nicht gelüfteten Räumen aufzustellen.

Ein weiterer Vorteil der Erfindung ist die Möglichkeit der Reduzierung des von der Klimatisierungseinrichtung ausgehenden Schalldruckpegels.

Die Verdampfereinheit kann als Dachaufbau oder Wandanbaueinheit ausgebildet sein oder in sonstiger Weise an oder im Schaltschrank positioniert werden.

Die Verbindungskupplungen ermöglichen es, die Verdampfereinheit getrennt von der Verflüssigereinheit zu handhaben und zu positionieren. Mittels der Schnellspannverschlüsse können die Kupplungsteile auch von fachkundigen Personen gefügt und so die Leitungsverbindung hergestellt werden.

Um die Verlegung der Kühlmittelleitungen ohne Fachkenntnisse und Spezialwerkzeug durchführen zu können, ist es vorgesehen, dass die zu- und abführenden Kühlmittelleitungen als flexible Rohrleitung ausgebildet sind.

Eine Ausgestaltungsvariante der Erfindung kann dadurch gekennzeichnet sein, dass die Verdampfereinheit ein den Verdampfer aufnehmendes Gehäuse aufweist, das auf dem Dach des Schaltschrankes positioniert oder im Schrank eingebaut ist, dass das Gehäuse eine zentrale Lufteintrittsöffnung aufweist, über die Luft des Schaltschrank-Innenraumes in das Gehäuse förderbar ist, dass seitlich der Lufteintrittsöffnung Luftaustrittsöffnungen angeordnet sind, über die gekühlte Luft aus dem Gehäuse in den Schaltschrank-Innenraum förderbar ist, und dass den Luftaustrittsöffnungen verstellbare Luftführungsmittel zugeordnet sind, mittels denen eine Variation der Luftführungsrichtung und/oder der Luftfördermenge möglich ist. Mit den Luftführurigsmitteln kann eine gezielte Kühlung im Schaltschrank-Innenraum bewirkt werden.

Gemäß einer Erfindungsalternative kann es vorgesehen sein, dass die Verdampfereinheit einen Kondensatauffang und eine zugeordnete Kondensatverdunstungseinrichtung aufweist.

Um in den Bereich der Verdampfereinheit möglichst geringe Lärmemissionen zu erzeugen, ist es vorgesehen, dass die Verdampfereinheit ein den Verdampfer aufnehmendes Gehäuse aufweist, das auf das Dach des Schaltschrankes aufgesetzt ist, dass das Gehäuse eine zentrale Lufteintrittsöffnung aufweist, über die Luft des Schaltschrank-innenraumes in das Gehäuse förderbar ist, dass seitlich der Lufteintrittsöffnung Luftaustrittsöffnungen angeordnet sind, über die gekühlte Luft aus dem Gehäuse in den Schaltschrank-Innenraum förderbar ist, und dass den Luftaustrittsöffnungen verstellbare Luftführungsmittel zugeordnet sind, mittels denen eine Variation der Luftführungsrichtung und/oder der Luftfördermenge möglich ist.

Um zu verhindern, dass Komponenten des Kältekreislaufes dann Schaden nehmen, wenn die Verbindungskupplungen gelöst werden, ist es erfindungsgemäß vorgesehen, dass dem Kompressor eine Überwachungseinrichtung zugeordnet ist, dass die Überwachungseinrichtung die Leistungsaufnahme des Kompressors in Intervalen oder permanent ermittelt und bei Überschreiten eines-voreingestellten Festwertes diesen abschaltet. Bei gelöster Verbindungskupplung wird die Kühlmittelzirkulations unterbrochen. Die Leistungsaufnahme des Kompressors erhöht sich dann jedoch nur bis zu dem voreingestellten Festwert. Der Kompressor kann dann geregelt abgeschaltet werden.

Wenn vorgesehen ist, dass in die zu- und die abführende Kühlmittelleitung ein Verteilerstück zum Anschluß von zwei oder mehreren Verdampfereinheiten an eine Verflüssigereinheit eingebaut ist, dann kann mit einer Verflüssigereinheit ein Kältekreislauf gespeist werden, dem mehrere Verdampfer zugeordnet sind.

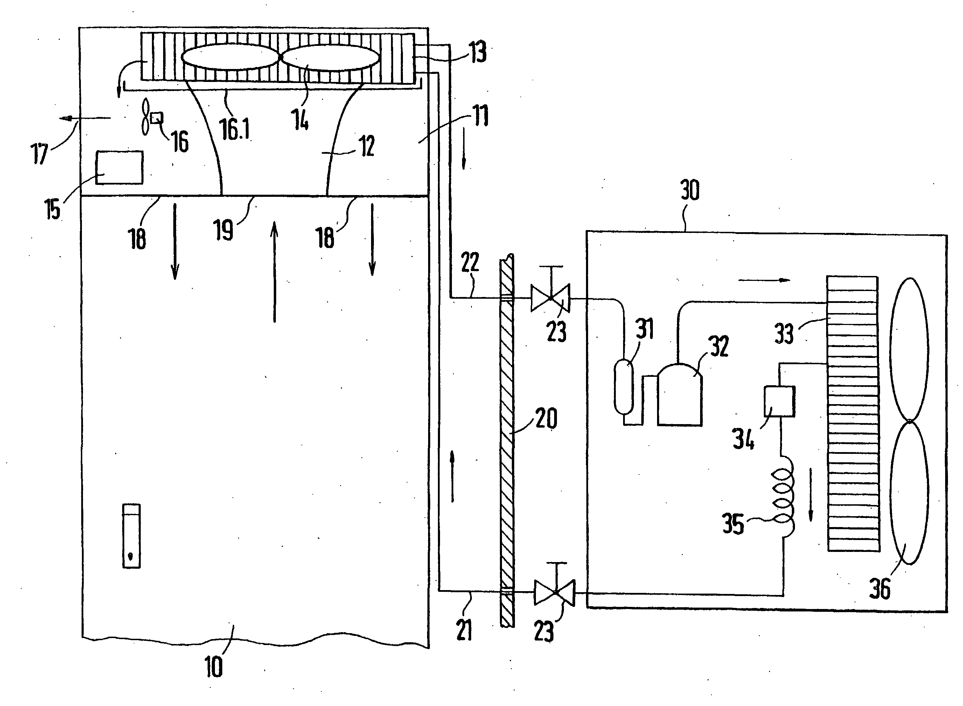

Die Erfindung wird im Folgenden anhand eines in der Zeichnung dargestellten Auführungsbespiel näher erläutert. In der Zeichnung ist in schematischer Darstellung ein Schaltschrank 10 mit einer Klimatisierungseinrichtung dargestellt.

Der Schaltschrank 10 weist einen Schaltschrankkorpus mit einem flächigen Dachbereich auf. Auf diesen Dachbereich ist eine Verdampfereinheit 11 der Klimatisierungseinrichtung aufgesetzt. Die Verdampfereinheit 11 ist ein Gehäuse, das einen Verdampfer 13 und einen Lüfter 14 aufnimmt. Dem Verdampfer 13 ist eine düsenförmige Luftführung 12 zugeordnet. Diese Luftführung 12 mündet an ihrem, dem Verdampfer 13 abgewandten Bereich in eine zentrale Lufteintrittsöffnung 19 des Gehäuses. Diese Lufteintrittsöffnung 19 steht über das Dach des Schaltschrankes 10 in räumlicher Verbindung mit dem Schalt-schranklnnenraum. Seitlich der zentralen Luftführung 12 ergeben sich Luftführungsbereiche im Gehäuse der Verdampfereinheit 11, die Luftaustrittsöffnungen 18 zugeordnet sind. Die Luftaustrittsöffnungen 18 münden wiederum in den Schaltschrank-Innenraum. Wie die Pfeildarstellungen der Zeichnung erkennen lassen, kann Luft aus dem Schaltschrank-Innenraum mittels des Lüfters 14 durch die Lufteintrittsöffnung 19 angesaugt werden. Die Luft durchströmt die Luftführung 12 und gelangt zu dem Verdampfer 13. Nachdem die Luft den Verdampfer 13 durchstömt hat, verläßt sie ihn im Seitenbereich des Gehäuses der Verdampfereinheit 11. Anschließend gelangt die am Verdampfer 13 klimatisierte Luft wieder über die Lufteintritts-öffnugnen 18 in den Schaltschrank-Innenraum. Die Lufteintrittsöffnungen 18 sind dabei mit Luftführungsmitteln versehen, die im Einzelnen in der Zeichnung nicht erkennbar sind. Die Luftführungsmittel, die beispielsweise als Steuerklappen ausgebildet sein können, dienen zur Variation sowohl der Luftmenge als auch der Luftströmungsrichtung. In dem Gehäuse der Verdampfereinheit 11 ist weiterhin eine Kondensatverdunstungs-Einrichtung 15 in Form eines Lüfters untergebracht, die das am Verdampfer 13 anfallende Kondensat verdunstet und mittels eines Lüfters 16 nach außen abführt.

Der Schaltschrank 10 ist in einem Aufstellraum untergebracht, was durch die Raumtrennungswand 20 symbolisch dargestellt ist. Abseits dieses Aufstellraumes ist eine Verflüssigereinheit 30 angeordnet. Die Verflüssigereinheit 30 weist einen Gehäusekorpus auf, in dem der Verflüssiger 33 und ein dem Verflüssiger 33 zugeordneter Lüfter untergebracht sind. Desweiteren ist in diesem Gehäusekorpus ein Sammler 31, ein Kompressor 32, ein Filter 34 und ein Expansionsventil 35 des Kältekreislaufes, untergebracht. Die Verdampfereinheit 11 steht mit der Verflüssigereinheit 30 über Kühlmittelleitungen 21, 22 in Verbindung. Die Kühlmittelleitungen 21, 22 sind durch die Raumtrennungswand 20 hindurchgeführt. In dem der Verflüssigereinheit 30 zugeordneten Raumbereich sind die Kühlmittelleitungen 21, 22 unterbrochen. Im Bereich der Trennstellen können die Kühlmittelleitungen 21, 22 mittels Kupplungen 23 verbunden werden. Dabei ist mit jedem Leitungsende ein Kupplüngsteil verbunden. Die beiden Kupplungsteile einer Kupplung 23 können mittels eines Schnellspannverschlusses miteinander in Verbindung gebracht werden. Bei diesem Verbindungseingriff wird eine leitende Verbindung zwischen den Leitungsenden hergestellt. Sowohl der Verbindungsaufbau als auch das Lösen der Kupplung 23 erfolgt leckagefrei, das heißt, kein Kühlmittel geht verloren.

## Patentansprüche

1. Schaltschrank oder Gehäuse mit einer Klimatisierungseinrichtung die ein Kältekreislaufsystem mit einem Verdampfer (13) und einem Verflüssiger (33) aufweist, wobei dem Verdampfer (13) ein Luftinnenkreislauf zugeordnet ist, der mit dem Schaltschrank-Innenraum in räumlicher Verbindung steht und durch den mittels eines Lüfters (14) die Luft des Schaltschrank-Innenraumes förderbar ist, und wobei der Verdampfer (13) über Kühlmittelleitungen in Verbindung mit den übrigen Komponenten des Kältekreislaufes steht,
**dadurch gekennzeichnet,**
**dass** der Verdampfer (13) zusammen mit einem zugeordneten Lüfter (14) in eine Verdampfereinheit (11) integriert ist, die am Schaltschrank (10) angeordnet ist,
**dass** der Verflüssiger (33) zusammen mit einem Lüfter (36) in eine Verflüssigereinheit (30) integriert ist,
**dass** die Verflüssigereinheit (30) räumlich getrennt von der Verdampfereinheit (11) und räumlich getrennt von dem Schaltschrank (10) angeordnet ist,
**dass** die Verdampfereinheit (11) mit der Verflüssigereinheit (30) über eine zuführende und eine abführende Kühlmittelleitung (21 und 22) in Verbindung steht,
**dass** diese Kühlmittelleitungen (21, 22) den freien Raumbereich zwischen der Verdampfereinheit (11) und der Verflüssigereinheit (30) überbrücken, dass in die beiden Kühlmittelleitungen (21, 22) Verbindungskupplungen (23) eingebaut sind, die je zwei Kupplungsteile aufweisen, von denen jedes druckfest mit einem Leitungsende der Kühlmittelleitungen (21, 22) verbunden ist, und
**dass** die beiden Kupplungsteile einer Kupplung mittels eines Schnellspannverschlusses verbindbar oder trennbar sind.

2. Schaltschrank nach Anspruch 1,
**dadurch gekennzeichnet,**
**dass** die zu- und abführenden Kühlmittelleitungen (21, 22) als flexible Rohrleitung ausgebildet sind.

3. Schaltschrank nach einem der Ansprüche 1 und 2,
**dadurch gekennzeichnet,**
**dass** die Verdampfereinheit (11) ein den Verdampfer (13) aufnehmendes Gehäuse aufweist, das am Schaltschrank (10) angebaut oder im Schaltschrank/Schaltschranksockel positioniert ist,
**dass** das Gehäuse eine zentrale Lufteintrittsöffnung (19) aufweist, über die Luft des Schaltschrank-Innenraumes in das Gehäuse förderbar ist,
**dass** seitlich der Lufteintrittsöffnung (19) Luftaustrittsöffnungen (18) angeordnet sind, über die gekühlte Luft aus dem Gehäuse in den Schaltschrank-Innenraum förderbar ist, und
**dass** den Luftaustrittsöffnungen (18) verstellbare Luftführungsmittel zugeordnet sind, mittels denen eine Variation der Luftführungsrichtung und/oder der Luftfördermenge möglich ist.

4. Schaltschrank nach einem der Ansprüche 1 bis 3,
**dadurch gekennzeichnet,**
**dass** die Verdampfereinheit (11) einen Kondensatauffang (15) und eine zugeordnete Kondensatverdunstungs-Einrichtung (16) aufweist.

5. Schaltschrank nach einem der Ansprüche 1 bis 4,
**dadurch gekennzeichnet,**
**dass** die Verflüssigereinheit (30) den Komoressor (32) und/oder die Einspritzung des Kältekreislaufes und/oder das Expansionsventil (35) aufweist.

6. Schaltschrank nach einem der Ansprüche 1 bis 5,
**dadurch gekennzeichnet,**
**dass** die Verbindungskupplungen (23) für die zu- und abführende Kühlmittelleitung (21, 22) an das Gehäuse der Verdampfer- (11) oder der Verflüssigereinheit (33) oder an flexiblen Schlauchleitungen fest angekoppelt sind.

7. Schaltschrank nach einem der Ansprüche 1 bis 6,
**dadurch gekennzeichnet,**
**dass** dem Kompressor (32) eine Überwachungseinrichtung zugeordnet ist, dass die Überwachungseinrichtung die Leistungsaufnahme des Kompressors (32) in Intervalen oder permanent ermittelt und bei Überschreiten eines voreingestellten Festwertes diesen abschaltet.

8. Schaltschrank nach einem der Ansprüche 1 bis 7,
**dadurch gekennzeichnet,**
**dass** in die zu- und die abführende Kühlmittelleitung (21, 22) ein Verteilerstück zum Anschluß von zwei oder mehreren Verdampferein-heiten (11) an eine Verflüssigereinheit (30) eingebaut ist.

## Claims

1. Switch cabinet or housing with an air-conditioning apparatus which has a refrigeration-circuit system with an evaporator (13) and a condenser (33), the evaporator (13) being assigned an inner air circuit which is in spatial connection with the switch-cabinet interior and through which the air of the switch-cabinet interior can be fed by means of a fan (14), and the evaporator (13) being connected to the rest of the components of the refrigeration circuit via coolant lines, **characterized in that** the evaporator (13), together with an associated fan (14), is integrated in an evaporator unit (11) which is arranged on the switch cabinet (10), **in that** the condenser (33), together with a fan (36), is integrated in a condenser unit (30), **in that** the condenser unit (30) is arranged separately from the evaporator unit (11) and separately from the switch cabinet (10), **in that** the evaporator unit (11) is connected to the condenser unit (30) via an infeeding and an outgoing coolant line (21 and 22), **in that** these coolant lines (21, 22) span the free space between the evaporator unit (11) and the condenser unit (30), **in that** installed in the two coolant lines (21, 22) are connecting couplings (23) which each have two coupling parts, of which each is connected in a pressure-resistant manner to one end of the coolant lines (21, 22), and **in that** the two coupling parts of a coupling can be connected or separated by means of a quickacting clamp.

2. Switch cabinet according to Claim 1, **characterized in that** the infeeding and outgoing coolant lines (21, 22) are designed as a flexible pipeline.

3. Switch cabinet according to either of Claims 1 and 2, **characterized in that** the evaporator unit (11) has a housing which accommodates the evaporator (13), is fitted on the switch cabinet (10) or is positioned in the switch cabinet/switch-cabinet base, **in that** the housing has a central air-inlet opening (19) via which air from the switch-cabinet interior can be fed into the housing, **in that** arranged to the sides of the air-inlet opening (19) are air-outlet openings (18), via which it is possible to feed cooled air from the housing into the switch-cabinet interior, and **in that** the air-outlet openings (18) are assigned adjustable air-channelling means, by means of which it is possible to vary the air-channelling direction and/or the air-channelling quantity.

4. Switch cabinet according to one of Claims 1 to 3, **characterized in that** the evaporator unit (11) has a condensation collector (15) and an associated condensation-evaporating device (16).

5. Switch cabinet according to one of Claims 1 to 4, **characterized in that** the condenser unit (30) contains the compressor (32) and/or the injection means of the refrigeration circuit and/or the expansion valve (35).

6. Switch cabinet according to one of Claims 1 to 5, **characterized in that** the connecting couplings (23) for the infeeding and outgoing coolant line (21, 22) are firmly coupled to the housing of the evaporator unit (11) or of the condenser unit (30) or to flexible hoses.

7. Switch cabinet according to one of Claims 1 to 6, **characterized in that** the compressor (32) is assigned a monitoring device, and **in that** the monitoring device determines the power consumption of the compressor (32) at intervals or on a permanent basis and switches off this compressor if a pre-set fixed value is exceeded.

8. Switch cabinet according to one of Claims 1 to 7, **characterized in that** a distributor component for connecting two or more evaporator units (11) to a condenser unit (30) is installed in the infeeding and the outgoing coolant line (21, 22).

## Revendications

1. Armoire de commande ou boîtier avec un dispositif de climatisation, qui présente un système de circuit frigorifique avec un évaporateur (13) et un condensateur (33), un circuit interne d'air étant associé à l'évaporateur (13), lequel communique spatialement avec l'espace interne de l'armoire de commande et à travers lequel l'air de l'espace interne de l'armoire de commande peut être acheminé au moyen d'un ventilateur (14), et l'évaporateur (13) étant en liaison par le biais de conduites de réfrigérant avec les autres composants du circuit frigorifique,
**caractérisé(e) en ce que**
l'évaporateur (13) est intégré, conjointement avec un ventilateur (14) associé, dans une unité d'évaporateur (11) qui est disposée sur l'armoire de commande (10),
en ce que le condensateur (33), conjointement avec un ventilateur (36), est intégré dans une unité de condensateur (30),
en ce que l'unité de condensateur (30) est séparée spatialement de l'unité d'évaporateur (11) et est séparée spatialement de l'armoire de commande (10),
en ce que l'unité d'évaporateur (11) est connectée à l'unité de condensateur (30) par le biais d'une conduite de réfrigérant (21 et 22) d'amenée et de sortie,
en ce que les conduites de réfrigérant (21, 22) s'étendent à travers la région d'espace libre entre l'unité d'évaporateur (11) et l'unité de condensateur (30),
en ce que dans les deux conduites de réfrigérant (21, 22) sont intégrés des raccords de connexion (23) qui présentent chacun deux pièces de raccord, dont chacune est connectée de manière résistant à la pression à une extrémité de conduite des conduites de réfrigérant (21, 22), et
en ce que les deux pièces de raccord d'un raccord peuvent être connectées ou séparées au moyen d'une fermeture à serrage rapide.

2. Armoire de commande selon la revendication 1,
**caractérisée en ce que**
les conduites de réfrigérant d'amenée et de sortie (21, 22) sont réalisées en forme de conduite tubulaire flexible.

3. Armoire de commande selon l'une quelconque des revendications 1 et 2,
**caractérisée en ce que**
l'unité d'évaporateur (11) présente un boîtier recevant l'évaporateur (13), qui est monté sur l'armoire de commande (10) ou qui est positionné dans l'armoire de commande/le socle de l'armoire de commande,
**en ce que** le boîtier présente une ouverture d'entrée d'air centrale (19), par le biais de laquelle de l'air peut être acheminé de l'espace interne de l'armoire de commande dans le boîtier,
**en ce que** latéralement à l'ouverture d'entrée d'air (19) sont prévues des ouvertures de sortie d'air (18) par le biais desquelles de l'air refroidi peut être acheminé hors du boîtier dans l'espace interne de l'armoire de commande, et
**en ce que** des moyens de guidage d'air réglables sont associés aux ouvertures de sortie d'air (18), au moyen desquels une variation de la direction de guidage de l'air et/ou de la quantité d'air refoulé est possible.

4. Armoire de commande selon l'une quelconque des revendications 1 à 3,
**caractérisée en ce que**
l'unité d'évaporateur (11) présente un collecteur de condensat (15) et un dispositif d'évaporation de condensat associé (16).

5. Armoire de commande selon l'une quelconque des revendications 1 à 4,
**caractérisée en ce que**
l'unité de condensateur (30) présente le compresseur (32) et/ou l'injection du circuit frigorifique et/ou la soupape de détente (35).

6. Armoire de commande selon l'une quelconque des revendications 1 à 5,
**caractérisée en ce que**
les raccords de connexion (23) pour la conduite de réfrigérant d'amenée et de sortie (21, 22) sont raccordés fixement au boîtier de l'unité d'évaporateur (11) ou de l'unité de condensateur (33) ou à des conduites tubulaires flexibles.

7. Armoire de commande selon l'une quelconque des revendications 1 à 6,
**caractérisée en ce**
**qu'**un dispositif de surveillance est associé au compresseur (32),
en ce que le dispositif de surveillance détecte la consommation de puissance du compresseur (32) par intervalles ou en permanence et déconnecte ce dernier dans le cas d'un dépassement d'une valeur fixe préajustée.

8. Armoire de commande selon l'une quelconque des revendications 1 à 7,
**caractérisée en ce**
**qu'**une pièce de distribution pour le raccordement de deux ou de plusieurs unités d'évaporateur (11) à une unité de condensateur (30) est intégrée dans la conduite de réfrigérant d'amenée et de sortie (21, 22).
